(19) Europäisches Patentamt
European Patent Office
Office européen des brevets

(11) EP 4 783 199 A1

(12) DEMANDE DE BREVET EUROPEEN

(43) Date de publication:
**29.07.2026 Bulletin 2026/31**

(21) Numéro de dépôt: **26153937.3**

(22) Date de dépôt: **23.01.2026**

(51) Classification Internationale des Brevets (IPC):
***H01B 3/44*** *(2006.01)* ***C08L 23/10*** *(2006.01)*

(52) Classification Coopérative des Brevets (CPC):
(C-Sets disponibles)
**H01B 3/441** (Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **28.01.2025 FR 2500899**

(71) Demandeur: **Nexans**
**92400 Courbevoie (FR)**

(72) Inventeurs:
- **PEREGO, Gabriele**
  **20144 MILAN (IT)**
- **MAZEL, Christelle**
  **92400 COURBEVOIE (FR)**
- **GUFFOND, Raphaël**
  **92400 COURBEVOIE (FR)**
- **BARUSTA, Charles**
  **92400 COURBEVOIE (FR)**

(74) Mandataire: **Cabinet Boettcher**
**5, rue de Vienne**
**75008 Paris (FR)**

(54) **COUCHE ISOLANTE POUR CABLE ELECTRIQUE, A BASE DE POLYPROPYLENE ET DE POLYMERES PORTEURS DE GROUPE POLAIRES**

(57) L'invention concerne un câble électrique comprenant au moins un élément électriquement conducteur allongé et au moins une couche électriquement isolante obtenue à partir d'une composition polymère comprenant (i) au moins un matériau polymère thermoplastique à base de polypropylène ; et (ii) au moins un additif qui est un polymère porteur de groupements carbonylés

EP 4 783 199 A1

(52) Classification Coopérative des Brevets (CPC):
(Cont.)

C-Sets
**C08L 23/10, C08L 51/06**

## Description

### Domaine technique

La présente invention a trait au domaine des câbles électriques comprenant une couche isolante à base d'un matériau polymère thermoplastique à base de polypropylène.

L'invention s'applique typiquement mais non exclusivement aux câbles électriques destinés au transport d'énergie, de préférence à moyenne tension (notamment de 6 à 45-60 kV) ou à haute tension (notamment supérieure à 60 kV, et pouvant aller jusqu'à 640 kV), qu'ils soient en courant continu ou alternatif, tels qu'on les emploie par exemple pour le transport d'électricité aérien, sous-marin, terrestre, ou encore dans l'aéronautique.

Par « couche isolante », on entend, au sens de la présente description, une couche électriquement isolante, capable d'isoler deux éléments conducteurs entre eux ou d'isoler un élément conducteur vis-à-vis de l'extérieur du câble.

Une « couche électriquement isolante » au sens de la présente invention est de préférence une couche dont la conductivité électrique est d'au plus $1.10^{-9}$ S/m, et de préférence d'au plus $1.10^{-10}$ S/m (siemens par mètre) (à 25°C).

Un câble de transport d'énergie à moyenne ou à haute tension comprend de préférence :

- au moins un élément électriquement conducteur allongé, notamment en cuivre ou en aluminium ;
- une première couche semi-conductrice dite couche semi-conductrice interne entourant ledit élément électriquement conducteur allongé ;
- une couche électriquement isolante, entourant ladite première couche semi-conductrice interne ;
- une deuxième couche semi-conductrice, dite couche semi-conductrice externe entourant ladite couche isolante, ladite couche contenant optionnellement des rubans semiconducteurs gonflants au contact de l'eau ;
- éventuellement un écran électrique entourant ladite couche semi-conductrice externe, optionnellement revêtu par des rubans semiconducteurs gonflants au contact de l'eau, et
- éventuellement une gaine de protection électriquement isolante entourant ledit écran électrique.

Pour la constitution des couches électriquement isolantes qui sont présentes dans les câbles électriques, notamment les câbles de transport d'énergie à moyenne ou à haute tension précités, il a été proposé d'employer un matériau polymère à base d'une polyoléfine réticulée telle qu'un polyéthylène réticulé (XLPE) ou un élastomère réticulé d'éthylène-propylène ou d'éthylène-propylène-diène (EPDM). La réticulation est généralement effectuée lors de l'étape d'extrusion de la composition polymère autour de l'élément électriquement conducteur allongé (avantageusement recouvert préalablement d'une couche semi-conductrice) . L'utilisation d'une polyoléfine réticulée permet de fournir une couche présentant des propriétés électriques et mécaniques améliorées par rapport à un polymère non réticulé tel que le LDPE. En particulier, les câbles comportant des couches isolantes à base de XLPE peuvent être utilisés jusqu'à des températures de 90°C alors que les câbles comportant une couche isolante à base de LDPE ne sont utilisables qu'à des températures inférieures, ne dépassant pas 70°C.

Cependant, les polyoléfines réticulées de type XLPE présentent un certain nombre d'inconvénients. D'une part, ces polymères ne sont pas facilement recyclables. D'autre part, leur processus de réticulation (vulcanisation) requiert des conditions de réaction spécifiques pour produire une couche homogène (notamment en termes de durée et de température), ce qui réduit la vitesse de fabrication du câble et augmente son coût de production. Pour obtenir un taux de réticulation satisfaisant, il est en effet nécessaire que le polymère puisse être porté à la température requise pour obtenir sa réticulation pendant une durée suffisamment longue. Ainsi, la vitesse de production des câbles comportant une couche électriquement isolante à base de XLPE doit en général être ajustée de manière à ce que le temps de passage dans le tunnel de réticulation soit assez long pour obtenir un taux de réticulation satisfaisant, ce qui représente une limite contraignante non négligeable en termes de capacité de production.

En outre, la réticulation du XLPE peut parfois débuter de façon prématurée dans l'extrudeuse (vis, collier) et/ou la tête d'extrudeuse, ce qui induit une formation de particules de XLPE dégradé dans l'extrudeuse selon le phénomène dit de « grillage » plus communément désigné et connu sous la dénomination anglaise de « *scorch* ». Les particules issues de ce phénomène de « scorch » sont ensuite susceptibles de migrer dans la couche électriquement isolante ou dans la couche semi-conductrice du câble et d'y créer des défauts. La présence de particules de XLPE dégradé affecte alors les propriétés finales du câble dans la mesure où ces particules génèrent un manque d'homogénéité, principalement du matériau de la couche électriquement isolante ou bien à l'interface entre la couche électriquement isolante et les couches semi-conductrices. L'utilisation de matériaux à base de LDPE pour les couches électriquement isolantes de câbles est donc en principe une alternative à l'utilisation de matériaux à base de XLPE. Cependant, les matériaux à base de LDPE présentent l'inconvénient de ne pas pouvoir être utilisés à des températures supérieures à 70°C, ce qui a également pour conséquence de réduire leur capacité à transporter de l'énergie de façon à éviter toute surchauffe de la couche électriquement isolante à des températures supérieures à 70°C.

Une technique alternative s'est développée qui s'affranchit de l'usage du XLPE et des inconvénients afférents,

où la couche électriquement isolante est à base de polypropylène. Les couches électriquement isolantes à base de polypropylène présentent de très bonnes propriétés diélectriques, qui permet de les envisager en pratique dans des transformateurs ou dans des câbles à basse tension.

Cependant, en marge de leurs excellentes propriétés électriques, les couches isolantes à base de polypropylène présentent en général des propriétés mécaniques et physico-chimiques insuffisantes pour certaines applications. Par exemple, une couche isolante uniquement constituée d'un homopolymère de polypropylène ne peut pas être employée en tant que telle au sein d'un câble à haute tension.

Pour améliorer les propriétés mécaniques et physico-chimiques des couches à base de polypropylène, il a été proposé d'y introduire une phase élastomère, par exemple à base de copolymères d'éthylène et de propylène. Cette solution n'est cependant pas pleinement adaptée pour le transport d'énergie à haute tension car, en marge de l'amélioration recherchée des propriétés mécaniques et physico-chimiques, l'introduction de la phase élastomère induit une réduction de la cristallinité et, partant, une diminution de la résistivité volumique du matériau polymère.

Un but de la présente invention est de fournir des compositions isolantes présentant des propriétés électriques au moins aussi bonnes que celle du polypropylène et ayant des propriétés mécaniques et physico-chimiques meilleures que celles du polypropylène. Dans ce cadre, l'invention se fixe notamment pour but de fournir une composition isolante qui puisse être utilisée dans un câble de transport d'énergie haute tension, notamment à courant continu, pour des tensions élevées pouvant aller jusqu'à 640 kV, par exemple entre 320 et 640 kV.

A cet effet, il est proposé selon la présente invention une couche isolante à base de polypropylène additivé de polymères porteurs de groupements polaires carbonylés, à savoir contenant une fonction carbonyle C=O, ces groupements polaires étant de préférence choisis parmi les groupements de type anhydride, acide carboxylique, esters et/ou cétone.

Les inventeurs ont maintenant mis en évidence que l'emploi de ces additifs porteurs de groupements polaires carbonylés permet d'augmenter la résistivité volumique de la couche isolante sans affecter ses propriétés mécaniques. Cette augmentation de la résistivité volumique, due aux additifs porteurs de groupements polaires carbonylés, permet, au besoin, d'introduire une phase élastomère additionnelle du type précité dans la couche isolante à base de polypropylène. La présence dans la couche de l'association de (i) une phase élastomère et (ii) des additifs porteurs de groupements carbonylés selon l'invention permet d'améliorer les propriétés mécaniques, tout en maintenant une résistivité volumique acceptable (schématiquement, l'effet positif des additifs sur la résistivité volumique contrebalance les effets délétères de la phase élastomère sur la résistivité volumique). Ainsi, selon un mode de réalisation particulier, la couche isolante à base de polypropylène comprend une phase élastomère additionnelle dispersée dans le propylène, en plus des polymères porteurs de groupements polaires carbonylés.

Cette présence additionnelle de phase élastomère dispersée est tout particulièrement indiquée pour réduire autant que possible les défauts de morphologie au sein de la couche isolante de l'invention, ce qui s'avère notamment intéressant pour des câbles véhiculant un courant continu de haute tension, par exemple de l'ordre de 320 à 640 kV.

Plus précisément, la présente invention a pour objet un câble électrique comprenant au moins un élément électriquement conducteur allongé et au moins une couche électriquement isolante obtenue à partir d'une composition polymère comprenant (i) au moins un matériau polymère thermoplastique à base de polypropylène ; et (ii) au moins un additif qui est un polymère porteur de groupements carbonylés.

L'additif employé dans la composition polymère permet de créer au sein de la couche polymères des zones polaires dispersées capables de piéger des charges électriques, ce qui augmente la résistivité volumique de la couche. A noter que pour obtenir un tel effet, il est nécessaire d'introduire suffisamment de groupes polaires pour obtenir l'effet souhaité, mais également de limiter la quantité de groupes polaires introduits, sans quoi la résistivité volumique du matériau se verrait diminuer au lieu d'augmenter.

Pour obtenir une modification sensible de la résistivité volumique de la couche isolante ; il est le plus souvent souhaitable que le polymère porteur de groupements carbonylés (qui joue le rôle d'additif) soit présent dans la composition polymère à hauteur d'au moins 1%, de préférence au moins 2%, en masse par rapport à la masse totale de la composition polymère.

Par ailleurs pour obtenir une augmentation de la résistivité volumique de la couche isolante et non sa diminution, il est en général souhaitable que le polymère porteur de groupements carbonylés soit présent dans la composition polymère à hauteur de moins de 20%, avantageusement moins de 15% en masse par rapport à la masse totale de la composition polymère.

Selon un mode particulièrement intéressant, le polymère porteur de groupements carbonylés est présent dans la composition polymère à hauteur de de 5 à 15% en masse, par rapport à la masse totale de la composition polymère.

Selon l'invention, il est notamment possible de modifier une couche isolante C à base de polypropylène donnée :

- en ajoutant des additifs polymères porteurs de groupements polaires carbonylés à la composition constitutive de la couche C ; ou
- en remplaçant une partie des polymères de la composition constitutive de la couche C par des additifs polymères

porteurs de groupements polaires carbonylés ; ou

- en greffant une partie des polymères de la composition constitutive de la couche C par des additifs polymères.

Les inventeurs ont maintenant mis en lumière que ces modifications de la couche isolante C augmentent sa résistivité électrique sans affecter négativement ses propriétés mécaniques.
Optionnellement, le polymère porteur de groupements carbonylés est présent dans la composition polymère à hauteur de 1% et 20% en masse de polymère porteur de groupements carbonylés par rapport à la masse totale de la composition polymère.
Optionnellement, les additifs polymères $P_2$ comprennent des polymères porteurs de groupements acide carboxylique ou cétone, de préférence des fonctions pendantes de formule -C(=O)OH et/ou -C(=O)R, où R est une chaine hydrocarbonée.
Différents aspects plus particuliers de l'invention, ainsi que des modes de réalisation possibles de l'invention sont décrits plus en détails ci-après.

LA COUCHE ELECTRIQUEMENT ISOLANTE ET LA COMPOSITION POLYMERE A PARTIR DE LAQUELLE ELLE EST OBTENUE

La couche électriquement isolante présente dans un câble selon l'invention est typiquement à base d'un matériau polymère thermoplastique, obtenu à partir d'une composition polymère thermoplastique qui comprend au moins un polymère à base d'unités propylènes, désigné ici par le terme générique de « polypropylène », et qui contient en outre des additifs spécifiques, porteurs de groupements polaires carbonylés.
Le terme « polypropylène », au sens où il est employé dans la présente description, désigne un homopolymère ou un copolymère comprenant des unités propylène. Dans le cas d'un polypropylène de type copolymère, il peut s'agir d' un copolymère statistique ; ou bien d'un copolymère séquencé qui comprend au moins deux blocs distincts, où au moins l'un des blocs comprend (ou est constitué par) des unités propylène. Dans un polypropylène au sens de la présente description, les unités propylènes peuvent former des blocs enchaînant une succession d'unités propylène ; et/ou contenir des unités propylène disséminées de façon aléatoire parmi d'autres unités monomères.
En général, une composition polymère employée pour la réalisation de la couche électriquement isolante d'un câble selon l'invention comprend :

- des polypropylènes, dits $P_1$, non porteurs de groupements polaires ;
  et
- des additifs polymères, dits $P_2$ , porteurs de groupements polaires carbonylés, qui incluent :
  - des polypropylènes, dits $P_{2-1}$ , porteurs de groupements polaires carbonylés (par exemple greffés par des groupements polaires carbonylés) ; ET/OU
  - des polymères, dits $P_{2-2}$ , autres que des polypropylène et porteurs de groupements polaires carbonylés ;
- éventuellement des polymères, dits P3, non polypropylènes et non porteurs de groupements polaires.

Les additifs polymères $P_2$ , caractéristiques de la présente invention, sont de préférence porteurs de groupements carbonylés choisis parmi les groupements de type anhydride, acide carboxylique et/ou cétone.
Ces additifs polymères $P_2$ représentent au total de préférence entre 0,5% et 5 % , avantageusement entre 1 et 4 % de la masse totale de la composition polymère.
Selon un premier mode de réalisation possible de l'invention, les additifs polymères $P_2$ comprennent (voire sont totalement constitués par) des polymères porteurs de groupements anhydride. Il peut par exemple d'agir de polymères greffés par des groupement anhydride. Ces fonctions anhydrides peuvent notamment être des fonctions anhydride maléique pendantes, de formule :

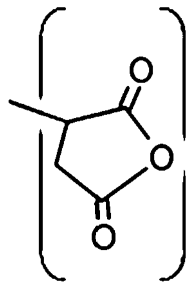

Dans le cadre de cette première variante, les polymère $P_2$ peuvent par exemple comprendre (voire sont totalement constitués par) des polypropylènes $P_{2-1}$ porteurs de groupements anhydride. Lorsqu'on emploie des polypropylènes $P_{2-1}$ porteurs de groupements anhydride, ils représentent au total de préférence entre 5 et 15 % de la masse totale de la composition polymère.

A titre d'exemple de polypropylènes $P_{2-1}$ utiles selon l'invention , on peut notamment employer les polymères commerciaux porteurs de groupement anydride suivants :Exxelor VA1801, Exxelor PO1015, Exxelor PO1020, Exxelor VA1803, Lucalen G3710E, Amplify GR 202, Amplify GR 205, Amplify GR 209, employés seuls ou en mélange.

Selon un autre mode de réalisation envisageable (compatible avec le mode précité), les additifs polymères $P_2$ comprennent (voire sont totalement constitués par) des polymères porteurs de groupements acide carboxylique, cétone ou esters, et comprenant avantageusement des groupements acide carboxylique ou cétone. On peut employer dans ce cadre aussi bien des polypropylènes $P_{2-1}$ que des polymères $P_{2-2}$ autres que des polypropylène.

Les fonctions acide carboxylique, cétone ou esters présentes dans les polymères $P_2$ employés selon ce mode de réalisation sont de préférence des fonctions pendantes respectivement de formule -C(=O)OH ou -C(=O)R, ou - C(=O)OR

où R est une chaine hydrocarbonée linéaire ou ramifiée, éventuellement cyclisée en tout ou partie, saturée ou insaturée (cette chaîne étant le plus souvent non cyclisée et avantageusement saturée), et comprenant avantageusement de 1 à 20 atomes de carbone, par exemple de 1 à 18 atomes de carbone, et notamment
de 2 à 16. A titre d'exemple, on peut employer les polymères commerciaux suivants, porteurs de groupements acide carboxylique ou cétone, à titre d'additifs $P_2$ selon l'invention : Lotryl 24MA05, Lotryl 40MA05, Lotryl 30BA02, seuls ou en mélange.

LES POLYMERES $P_1$ (POLYPROPYLENES NON PORTEURS DE GROUPEMENTS POLAIRES)

Ces polymères $P_1$ représentent au total de préférence entre 95 et 80 % , avantageusement entre 95 et 85% de la masse totale de la composition polymère.

Ces polymères $P_1$ peuvent comprendre des homopolymères de propylène et/ou des copolymères comprenant des unités propylène.

Les homopolymères de propylène présents à titre de polymères P1 dans la composition polymère peuvent par exemple présenter un module élastique allant de 1250 à 1600 MPa environ.

Les copolymères de propylène présents à titre de polymères P1 dans la composition polymère peuvent être des copolymères à bloc comprenant au moins un bloc polypropylène constitué uniquement des unités propylène et au moins un autre bloc ; ou des copolymères statistiques comprenant une distribution d'unités propylène et d'autres unités.

A titre d'exemples de copolymères de propylène $P_1$, on peut citer les copolymères, à blocs ou statistiques, de propylène et d'oléfine, l'oléfine étant notamment choisie parmi l'éthylène et une oléfine $\alpha_1$ différente du propylène.

L'éthylène ou l'oléfine $\alpha_1$ différente du propylène du copolymère de propylène et d'oléfine représente de préférence au plus 15% en mole environ, et de préférence encore au plus 10% en mole environ, par rapport au nombre de moles total de copolymère de propylène et d'oléfine.

L'oléfine $\alpha_1$ différente du propylène peut répondre à la formule $CH_2$=CH-$R^1$, dans laquelle $R^1$ est un groupe alkyle linéaire ou ramifié ayant de 2 à 12 atomes de carbone, notamment choisie parmi les oléfines suivantes : 1-butène, 1-pentène ; 4-méthyl-1-pentène, 1-hexène, 1-octène, 1-décène, 1-dodécène, et un de leurs mélanges.

Les copolymères de propylène et d'éthylène sont préférés à titre de copolymère de propylène présents à titre de polymères $P_1$

Les copolymères de propylène présents à titre de composés $P_1$ peuvent être des copolymères statistiques de propylène ou des copolymères de propylène hétérophasés, et il s'agit de préférence de copolymères de propylène hétérophasés.

Les polymères P1 peuvent comprendre un mélange de plusieurs polypropylène homo et/ou copolymère. En

particulier, les polymères $P_1$ peuvent comprendre un mélange de plusieurs copolymères de propylène différents, notamment deux copolymères de propylène différents.

Selon un mode particulier, les polymères $P_1$ peuvent comprendre un mélange d'un premier copolymère statistique de propylène ; et d'un deuxième copolymère de propylène hétérophasé . Cette combinaison de copolymères de propylène $P_1$ permet en général d'améliorer les propriétés mécaniques de la couche isolante.

Les copolymères statistiques de propylène présents à titre de polymère $P_1$ dans la composition polymère ont de préférence un module élastique allant de 600 à 1200 MPa environ.

À titre d'exemple adapté de copolymère statistique de propylène, on peut citer celui commercialisé par la société Borealis sous la référence Bormed® RB 845 MO.

Les copolymères hétérophasés de propylène présents à titre de polymère $P_1$ dans la composition polymère ont de préférence un module élastique allant de 50 à 250 MPa environ.

Ces copolymères hétérophasés peuvent avantageusement comprendre une phase thermoplastique de type propylène et une phase élastomère thermoplastique de type copolymère d'éthylène et d'une oléfine $\alpha_2$.

L'oléfine $\alpha_2$ de la phase élastomère thermoplastique du copolymère hétérophasé peut être le propylène.

La phase élastomère thermoplastique du copolymère hétérophasé peut représenter au moins 20% en masse environ, et de préférence au moins 45% en masse environ, par rapport à la masse totale du copolymère hétérophasé.

À titre d'exemple adapté de copolymère hétérophasé, on peut mentionner le copolymère hétérophasé commercialisé par la société Basell Polyolefins sous la référence Adflex® Q 200 F.

Les polypropylènes homopolymères ou copolymères présents à titre de polymères $P_1$ peuvent typiquement avoir une température de fusion supérieure à 130°C environ, de préférence supérieure à 140°C environ, et de préférence encore allant de 140 à 170°C environ.

Les polypropylènes homopolymères ou copolymères présents à titre de polymères $P_1$ peuvent typiquement avoir une enthalpie de fusion allant de 20 à 100 J/g environ.

Les polypropylènes homopolymères présents à titre de polymères $P_1$ ont de préférence une enthalpie de fusion allant de 80 à 90 J/g environ.

Les copolymères statistiques de propylène $P_1$ présents à titre de polymères $P_1$ peuvent avoir une enthalpie de fusion allant de 40 à 80 J/g environ.

Les copolymères hétérophasés de propylène présents à titre de polymères $P_1$ peut avoir une enthalpie de fusion allant de 20 à 50 J/g environ.

Les polypropylènes homopolymères ou copolymères présents à titre de polymères $P_1$ peuvent avoir un indice de fluidité allant de 0,5 à 3 g/10 min, mesuré à 230°C environ avec une charge de 2,16 kg environ selon la norme ASTM D1238-00.

Les copolymères statistiques de propylène présents à titre de polymères $P_1$ peuvent avoir un indice de fluidité allant de 1,2 à 2,5 g/10 min, mesuré à 230°C environ avec une charge de 2,16 kg environ selon la norme ASTM D1238-00.

Les copolymères hétérophasés de propylène présents à titre de polymères $P_1$ peut avoir un indice de fluidité allant de 0,5 à 1,5 g/10 min, mesuré à 230°C environ avec une charge de 2,16 kg environ selon la norme ASTM D1238-00.

Selon un mode avantageux, la composition polymère comprend un copolymère de propylène ou un mélange de plusieurs copolymères de propylène à titre de polymères $P_1$, avec une teneur en ces copolymère de propylène d'au moins 50% en masse , de préférence de 55 à 95% en masse , par exemple entre 60 à 90% en masse, par rapport à la masse totale de la composition polymère

La composition polymère peut avantageusement comprendre au moins 20% en masse, de préférence de 30 à 70% en masse par rapport à la masse totale de la composition polymère de copolymères statistiques de propylène présents à titre de polymère $P_1$.

La composition polymère peut avantageusement comprendre au moins 1% en masse, de préférence de 2 à 40% en masse par rapport à la masse totale de la composition polymère de copolymères hétérophasés de propylène présents à titre de polymère $P_1$.

LES POLYMERES $P_3$ (NON POLYPROPYLENES ET NON PORTEURS DE GROUPEMENTS POLAIRES)

Ces polymères $P_3$ (autres que des polypropylènes et non porteurs de groupements polaires) représentent de préférence moins de 40% , avantageusement entre 10 et 30% de la masse totale de la composition polymère.

Ces polymères $P_3$ peuvent par exemple être des homopolymères ou un copolymère d'oléfine autre que le propylène, l'oléfine étant notamment choisie parmi l'éthylène et une oléfine $\alpha_3$ autre que le propylène.

La combinaison de polymères $P_1$ et $P_3$ permet notamment d'obtenir un matériau polymère thermoplastique présentant de bonnes propriétés mécaniques, notamment en termes de module élastique.

L'oléfine $\alpha_3$ de l'homopolymère ou du copolymère d'oléfine $P_2$ peut répondre à la formule $CH_2$=CH-$R^2$, dans laquelle $R^2$ est un groupe alkyle linéaire ou ramifié ayant de 1 à 12 atomes de carbone autre que le propylène, notamment choisie parmi les oléfines suivantes : 1-butène, isobutylène, 1-pentène, 4-méthyl-1-pentène, 1-hexène, 1-octène, 1-décène, 1-dodécène, et un de leurs mélanges.

Les oléfine $\alpha_3$ 1-hexène ou 1-octène sont particulièrement préférées.

Le polymère $P_3$ peut être un polyéthylène.

Le polyéthylène peut être un polyéthylène basse densité, et de préférence un polyéthylène linéaire basse densité, notamment selon la norme ISO 1183A (à une température de 23°C). Dans la présente description, l'expression « polyéthylène linéaire basse densité » désigne un polyéthylène linéaire ayant une densité allant de 0,91 à 0,925 environ, ladite densité étant mesurée selon la norme ISO 1183A (à une température de 23°C).

AUTRES COMPOSES EVENTUELS

La composition polymère peut comprendre en outre un liquide diélectrique, de préférence en formant un mélange intime avec les autres constituants de la composition polymère.

À titre d'exemples de liquide diélectrique, on peut citer les huiles minérales (e.g. huiles naphténiques, huiles paraffiniques ou huiles aromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.

Selon un mode de réalisation particulier, le liquide diélectrique est présent à hauteur de 1% à 20% en masse, de préférence de 2 à 15% en masse, et de préférence encore de 3 à 12% en masse, par rapport à la masse totale de la composition polymère.

Une huile minérale adaptée est généralement liquide à 20-25°C environ, et elle peut par exemple être choisie parmi les huiles naphténiques et les huiles paraffiniques.

Selon un mode de réalisation possible, on emploie une huile minérale qui comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

La composition polymère peut par ailleurs comprendre des additifs, qui peuvent par exemple être choisis parmi des antioxydants, des agents anti-UV, des agents anti-cuivre, des agents anti-arborescences d'eau, des pigments, ou un de leurs mélanges.

La composition polymère peut typiquement comprendre moins de 5% de ces additifs, par exemple de 0,01 à 5% en masse environ, notamment de 0,1 à 2% en masse environ , par rapport à la masse totale de la composition polymère.

Les antioxydants, lorsqu'ils sont employés, permettent notamment de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine, et leurs mélanges.

À titre d'exemples de phénols encombrés, on peut citer le Pentaérythritol tétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10), le 2,2'-thiobis(6-*tert*-butyl-4-méthylphénol) (Irganox® 1081), le 2,2'- thiodiéthylène bis[3-(3,5-di-*tert*-butyl-4-hydroxyphényl) propionate] (Irganox® 1035), le 2,2'-méthylènebis(6-*tert*-butyl-4-méthylphénol), le 1,2-bis(3,5-di-tert-butyl-4-hydroxyhydrocinnamoyl) hydrazine (Irganox® MD 1024), ou le 2,2'-oxamido-bis(éthyl-3(3,5-di-*tert*-butyl-4-hydroxyphényle)propionate).

À titre d'exemples de thioesters, on peut citer le didodécyl-3,3'-thiodipropionate (Irganox® PS800), le distéaryl thiodipropionate (Irganox® PS802) ou le 4,6-bis(octylthiométhyle)-o-crésol (Irganox® 1520).

À titre d'exemples d'antioxydants à base de soufre, on peut citer le dioctadecyl-3,3'-thiodipropionate ou le didodecyl-3,3'-thiodipropionate.

À titre d'exemples d'antioxydants à base de phosphore, on peut citer le tris(2,4-di-*tert*-butyl-phényle)phosphite (Irgafos® 168) ou le bis(2,4-di-*tert*-butylphényl)pentaérythritol diphosphite (Ultranox® 626).

À titre d'exemples d'antioxydants de type amine, on peut citer les phénylènes diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

La couche électriquement isolante de l'invention, à base d'un matériau polymère thermoplastique contenant un polypropylène est de préférence une couche polymère thermoplastique, de préférence non réticulée. Dans la présente description, l'expression « couche thermoplastique non réticulée » signifie une couche dont le taux de gel selon la norme ASTM D2765-01 (extraction au xylène) est d'au plus 20%, de préférence d'au plus 10%, de préférence d'au plus 5%, et de façon particulièrement préférée de 0%.

La composition polymère à partir de laquelle la couche est réalisée est donc de préférence une composition non

réticulable, qui ne comprend en particulier pas d'agents de réticulation, d'agents de couplage de type silane, de peroxydes et/ou d'additifs qui permettent une réticulation. De tels agents dégraderaient sinon le matériau polymère thermoplastique à base de polypropylène.

La composition polymère utile selon l'invention peut être préparée par simple mélange des polymères et additifs précités, en une ou plusieurs étapes.

La couche électriquement isolante du câble selon l'invention présente avantageusement au moins un, voire l'ensemble des caractéristiques décrites ci-après :

- la couche électriquement isolante d'un câble selon l'invention est de préférence recyclable, ce qui implique le plus souvent (sinon systématiquement) qu'elle soit non réticulée ;
- avantageusement, la couche électriquement isolante d'un câble selon l'invention présente une résistance à la traction (RT) d'au moins 130 MPa, notamment avant ou après vieillissement (selon la norme CEI 20-86) ;
- avantageusement, la couche électriquement isolante d'un câble selon l'invention présente une élongation à la rupture (ER) d'au moins 350%, notamment avant ou après vieillissement (selon la norme CEI 20-86).

La résistance à la traction (RT) et l'élongation à la rupture (ER) (avant ou après vieillissement) peuvent être effectués selon la Norme NF EN 60811-1-1, notamment à l'aide d'un appareil commercialisé sous la référence 3345 par la société Instron.

La couche électriquement isolante d'un câble selon l'invention peut notamment être un couche appliquée par extrusion autour d'au moins un élément électriquement conducteur allongé, notamment selon des techniques bien connues en soi par l'homme du métier.

L'épaisseur de la couche électriquement isolante peut varier en fonction du type de câble envisagé. En particulier, lorsque le câble selon l'invention est un câble à moyenne tension, l'épaisseur de la couche isolante est typiquement de 4 à 5,5 mm environ, et plus particulièrement de 4,5 mm environ. Lorsque le câble conforme à l'invention est un câble haute tension, l'épaisseur de la couche isolante varie typiquement de 17 à 18 mm (pour des tensions de l'ordre 150 kV environ) et pour aller jusqu'à des épaisseurs allant de 20 à 25 mm environ pour des tensions supérieures à 150 kV (câbles à très haute tension). Les épaisseurs précitées dépendent notamment de la taille de l'élément électriquement conducteur allongé et du niveau de tension désiré.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, ou en une de leurs combinaisons.

Selon une forme de réalisation préférée de l'invention, le câble électrique comprend :

- une première couche semi-conductrice entourant l'élément électriquement conducteur allongé,
- une couche électriquement isolante selon l'invention entourant la première couche semi-conductrice, , et
- une deuxième couche semi-conductrice entourant la couche électriquement isolante.

Dans la présente invention, on entend par « couche semi-conductrice » une couche dont la conductivité électrique peut être d'au moins $1.10^{-9}$ S/m (siemens par mètre), de préférence d'au moins $1.10^{-3}$ S/m, et de préférence peut être inférieure à $1.10^{3}$ S/m (à 25°C).

Selon ce mode de réalisation, la première couche semi-conductrice, la couche électriquement isolante et la deuxième couche semi-conductrice constituent typiquement une isolation tricouche. La couche électriquement isolante est alors en contact physique direct avec la première couche semi-conductrice, et la deuxième couche semi-conductrice est en contact physique direct avec la couche électriquement isolante.

La première et la deuxième couches semi-conductrices sont de préférence à base d'un matériau polymère thermoplastique.

Le câble peut comprendre en outre une gaine électriquement isolante entourant la deuxième couche semi-conductrice, et peut être en contact physique direct avec celle-ci.

Le câble électrique peut comprendre en outre un écran électrique (e.g. métallique) entourant la deuxième couche semi-conductrice. Dans ce cas, la gaine électriquement isolante entoure ledit écran électrique et l'écran électrique est entre la gaine électriquement isolante et la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb

et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

EXEMPLE

La conductivité volumique d'échantillons sous forme de plaques a été mesurée dans les conditions suivantes (compatibles avec les normes IEC60093 et ASTM D257) : les échantillons ont été testés à 70°C, en appliquant des champs électriques croissants de 20 à 40 kV/mm. Pour chaque étape d'application, le courant de fuite a été mesuré sur une durée de 2 à 3 jours de façon à permettre à l'échantillon d'atteindre un état stable avant de procéder à la mesure suivante avec un champ électrique de tension plus élevée.

Les échantillons testés ont été préparés par extrusion des deux compositions polymère dont la composition est donnée ci-dessous (les pourcentages sont donnés en masse par rapport à la masse totale de la composition considérée) :

| | Composition 1 (témoin) | Composition 2 (selon l'invention) |
|---|---|---|
| POLYMERE I (*) | 94% | 79% |
| POLYMERE II (**) | | 15% |
| Huile minérale | 5,4% | 5,4% |
| Antioxydant | 0,3% | 0,3% |
| Benzophénone | 0,3% | 0,3% |
| total | 100% | 100% |

NOTE CONCERNANT LE TABLEAU CI-DESSUS :
(*) : POLYMERE II : polypropylène non porteur de groupement polaire
(**) : POLYMERE II : polymère porteur de groupements anhydride

L'extrusion a été conduite au sein d'une extrudeuse Bersstoff double vis.

La modification de l'intensité du courant à voltage constant a été mesurée au cours du temps. Il a été observé une diminution progressive de l'intensité correspondant à la double loi exponentielle suivante :

$$i=iDC+iC\exp(-t\tau C)+iP\exp(-t\tau P)$$

La première exponentielle correspond au courante de charge et la seconde au courant de polarisation. La constante de temps du courant de charge $\tau C$ est de 0,2 jours et celle du courant de polarisation est 1 à 2 jours.

A partir de cette équation et des mesures effectuées, le courant de fuite *iC à* l'état stationnaire a été calculé. La valeur de la densité de courant l'état stationnaire a été obtenue en divisant le courant par la surface de l'électrode.

Les tableaux ci-dessous reportent les valeurs moyennes mesurées sur 4 séries d'échantillons identiques testés en parallèle avec chacune des compositions : composition 1 (témoin) et composition 2 (selon l'invention).

| | Voltage (V) | E (V/m) | $I_{\text{état stable}}$ (A) | $J_{\text{état stable}}$ (A/m2) | Conductivité (S/m) |
|---|---|---|---|---|---|
| Composition 1 (témoin) | 6400 | 2E+07 | 1,9E-09 | 5,0E-07 | 1,6E-14 |
| | 9600 | 3E+07 | 2,6E-09 | 6,7E-07 | 2,2E-14 |
| | 12500 | 4E+07 | 4,5E-09 | 1,2E-06 | 2,9E-14 |

| | Voltage (V) | E (V/m) | I état stable (A) | J état stable (A/m2) | Conductivité (S/m) |
|---|---|---|---|---|---|
| Composition 2 | 6400 | 2E+0 7 | 1,7E-10 | 4,4E-08 | 2,2E-15 |
| | 9600 | 3E+0 7 | 4,8E-10 | 1,2E-07 | 4,1E-15 |
| | 12500 | 4E+0 7 | 7,5E-10 | 2,0E-07 | 4,9E-15 |

Ces résultats illustrent une nette augmentation de la résistivité volumique lorsque le polymère II porteur de groupements anhydride est incorporé dans la composition témoin.

Les propriétés mécaniques ont été mesurées selon des tests de résistance à la traction (RT) et d'élongation à la rupture (ER) effectués sur les matériaux selon la Norme NF EN 60811-1-1 sur un banc de traction Instron serie 3345, à une vitesse d'étirement de 50mm/min. Les résultats obtenus sont reportés ci-dessous :

| | Composition 1 (témoin) | Composition 2 |
|---|---|---|
| Densité | 0,865 | 0,877 |
| Propriétés mécaniques initiales | | |
| TS (Mpa) | 15,9 | 15,4 |
| EB (%) | 713 | 835 |
| Propriétés mécaniques Après vieillissement (10 jours à 135°C) | | |
| TS (Mpa) | 17,6 | 16 |
| EB % | 673 | 772 |

**Revendications**

**1.** Câble électrique comprenant au moins un élément électriquement conducteur allongé et au moins une couche électriquement isolante obtenue à partir d'une composition polymère comprenant (i) au moins un matériau polymère thermoplastique à base de polypropylène ; et (ii) au moins un additif qui est un polymère porteur de groupements carbonylés.

**2.** Câble électrique selon la revendication 1 où le polymère porteur de groupements carbonylés est présent dans la composition polymère à hauteur de 1% et 20% en masse de polymère porteur de groupements carbonylés par rapport à la masse totale de la composition polymère.

**3.** Câble électrique selon la revendication 1 ou 2, où la composition polymère comprend :

• des polymères $P_1$ non porteurs de groupements polaires ;
ET
• des additifs polymères $P_2$ de groupement polaires carbonylés, lesdits additifs polymères $P_2$ incluant :

- des polypropylènes $P_{2-1}$ porteurs de groupements polaires carbonylés ;
ET/OU
- des polymères $P_{2-2}$ autres que des polypropylène et porteurs de groupements polaires carbonylés

• éventuellement des polymères P3 non polypropylènes et non porteurs de groupements polaires.

**4.** Câble électrique selon la revendication 3, dans lequel les polypropylènes $P_{2-1}$ porteurs de groupements polaires carbonylés sont greffés par des groupements polaires carbonylés.

**5.** Câble électrique selon la revendication 3 ou la revendication 4, où la composition polymère comprend de 0,5 % à 5 % en masse d'additifs polymères $P_2$ porteurs de groupements carbonylés choisis parmi les groupements de type anhydride, acide carboxylique et/ou cétone.

**6.** Câble électrique selon la revendication 3 ou 4 ou la revendication 5, où les additifs polymères $P_2$ comprennent des polymères porteurs de groupements anhydride.

**7.** Câble électrique selon la revendication 6, où les groupements anhydride sont des groupements anhydrique maléique pendants.

**8.** Câble électrique selon la revendication 7, où les additifs polymères $P_2$ comprennent des polypropylènes $P_{2-1}$ porteurs de groupements anhydride.

**9.** Câble électrique selon la revendication 3 ou 4 ou 5, où les additifs polymères $P_2$ comprennent des polymères porteurs de groupements acide carboxylique ou cétone, de préférence des fonctions pendantes de formule - C(=O)OH et/ou -C(=O)R, où R est une chaine hydrocarbonée.

**10.** Câble électrique selon l'une des revendications 3 à 9, où les polymères $P_1$ comprennent un mélange d'un premier copolymère statistique de propylène ; et d'un deuxième copolymère de propylène hétérophasé.

Europäisches Patentamt
European Patent Office
Office européen des brevets

# RAPPORT DE RECHERCHE EUROPEENNE

Numéro de la demande
EP 26 15 3937

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2024/204513 A1 (FURUKAWA ELECTRIC CO LTD [JP]) 3 octobre 2024 (2024-10-03) * revendications 1-10; exemples 1-7, 11-13 * | 1-10 | INV. H01B3/44 C08L23/10 |
| X | WO 2007/118659 A1 (BOREALIS TECH OY [FI]; GREIN CHRISTELLE [AT] ET AL.) 25 octobre 2007 (2007-10-25) * page 8, ligne 6 - ligne 20; revendications 1-18; exemple 4; tableau 1 * | 1-10 | |
| X | EP 2 793 236 A1 (BOREALIS AG [AT]) 22 octobre 2014 (2014-10-22) * revendications 1-15; exemples IE1-IE2 * | 1-10 | |
| | | | DOMAINES TECHNIQUES RECHERCHES (IPC) |
| | | | H01B C08L |

Le présent rapport a été établi pour toutes les revendications

1

| Lieu de la recherche | Date d'achèvement de la recherche | Examinateur |
|---|---|---|
| Munich | 18 mai 2026 | Marsitzky, Dirk |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 26 15 3937

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-05-2026

| Document brevet cité au rapport de recherche | Date de publication | Membre(s) de la famille de brevet(s) | Date de publication |
|---|---|---|---|
| WO 2024204513 A1 | 03-10-2024 | CN 119998385 A | 13-05-2025 |
| | | EP 4692204 A1 | 11-02-2026 |
| | | JP WO2024204513 A1 | 03-10-2024 |
| | | KR 20250113379 A | 25-07-2025 |
| | | WO 2024204513 A1 | 03-10-2024 |
| WO 2007118659 A1 | 25-10-2007 | AT E499408 T1 | 15-03-2011 |
| | | BR PI0710456 A2 | 16-08-2011 |
| | | CA 2649152 A1 | 25-10-2007 |
| | | CN 101426848 A | 06-05-2009 |
| | | EA 200802022 A1 | 27-02-2009 |
| | | EP 1847565 A1 | 24-10-2007 |
| | | ES 2361765 T3 | 22-06-2011 |
| | | KR 20090007339 A | 16-01-2009 |
| | | PL 1847565 T3 | 29-07-2011 |
| | | US 2010022715 A1 | 28-01-2010 |
| | | WO 2007118659 A1 | 25-10-2007 |
| | | ZA 200808655 B | 29-07-2009 |
| EP 2793236 A1 | 22-10-2014 | CN 105103241 A | 25-11-2015 |
| | | EP 2793236 A1 | 22-10-2014 |
| | | ES 2545428 T3 | 10-09-2015 |
| | | US 2016071628 A1 | 10-03-2016 |
| | | WO 2014170128 A1 | 23-10-2014 |

EPO FORM P0460

Pour tout renseignement concernant cette annexe : voir Journal Officiel de l'Office européen des brevets, No.12/82